(19) Europäisches Patentamt
European Patent Office
Office européen des brevets

(11) Veröffentlichungsnummer: **0 182 740**
**A2**

# (12) EUROPÄISCHE PATENTANMELDUNG

(21) Anmeldenummer: **85810481.3**

(22) Anmeldetag: **21.10.85**

(51) Int. Cl.⁴: **A 01 N 43/70**, A 01 N 47/30, A 01 N 47/36 // (A01N43/70, 43:50),(A01N47/30, 43:50),(A01N47/36, 43:50)

(30) Priorität: **25.10.84 CH 5109/84**

(43) Veröffentlichungstag der Anmeldung: **28.05.86 Patentblatt 86/22**

(84) Benannte Vertragsstaaten: **AT BE CH DE FR GB IT LI NL**

(71) Anmelder: **CIBA-GEIGY AG, Klybeckstrasse 141, CH-4002 Basel (CH)**

(72) Erfinder: **Nyffeler, Andreas, Dr., Gründlerstrasse 4, CH-4312 Magden (CH)**
Erfinder: **Gerber, Hans-Rudolf, Dr., Blözenweg 49, CH-4133 Pratteln (CH)**

## (54) Synergistisches Mittel und Verfahren zur selektiven Unkrautbekämpfung, insbesondere in Getreide.

(57) Mittel, welche als Wirkstoff einerseits 3-Carbamoyl-1-(3-methylphenyl)-5-phenyl-1H-1,2,4-triazol der Formel

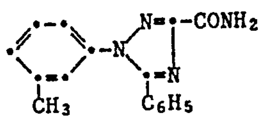
(I)

und andererseits entweder eine Wirkstoff der Formel II

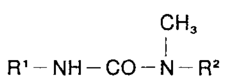
(II)

worin R¹ für 3,4-Dichlorphenyl, 3-Chlor-4-methylphenyl, 4-Isopropylphenyl oder Methyl und R² für Methyl, Butyl oder 2-Benzothiazolyl stehen, oder einen Wirkstoff der Formel III

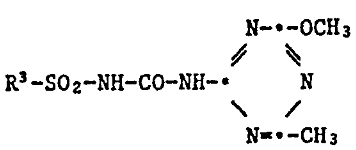
(III)

worin R³ für 2-Chlorphenyl, 2-Methoxycarbonylphenyl, 2-(2-Chloräthoxy)phenyl oder 2-Methoxycarbonylthien-3-yl steht, oder einen Wirkstoff der Formel IV

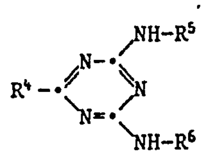
(IV)

worin R⁴ für Chlor oder Methylthio, R⁵ für Äthyl oder Methoxypropyl und R⁶ für Äthyl, tert.-Butyl, 1-Cyanoisopropyl oder Isopropyl stehen, in Mischung miteinander enthalten, zeigen in Getreide synergistische herbizide Wirkung.

EP 0 182 740 A2

0182740

CIBA-GEIGY AG
Basel (Schweiz)

5-15125/+

Synergistisches Mittel und Verfahren zur selektiven Unkrautbekämpfung, insbesondere in Getreide

Die vorliegende Erfindung betrifft ein synergistisches Mittel, welches eine herbizide Wirkstoffkombination enthält, die sich hervorragend eignet zur selektiven Unkrautbekämpfung in Getreidekulturen. Die Erfindung betrifft auch ein Verfahren zur Bekämpfung von Unkräutern, insbesondere in Getreide, und die Verwendung des neuen Mittels.

Die zur Zeit häufigsten und wichtigsten Unkräuter in Getreide sind Spezies der Gattung Alopecurus (Fuchsschwanzgras), Galium (Labkraut), Stellaria (Sternmiere), Veronica (Ehrenpreis) und gewisse Violaceae (Veilchengewächse).

Als hervorragendes Selektivherbizid gegen Unkräuter in Kulturpflanzen hat sich 3-Carbamoyl-1-(3-methylphenyl)-5-phenyl-1H-1,2,4-triazol der Formel I

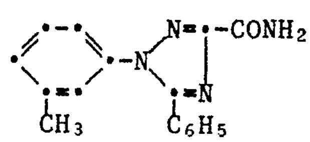

(I)

erwiesen. Dieser Wirkstoff ist mit seiner Herstellung und Verwendung in der publizierten Europäischen Patentanmeldung EP-A-70089 beschrieben.

Andererseits sind Verbindungen der Formeln II, III und IV ebenfalls als selektive Herbizide bekannt und sind teilweise bereits im Handel erhältlich.

Unter die Formel II

$$R^1\text{-NH-CO-}\overset{CH_3}{\overset{|}{N}}\text{-}R^2 \qquad \text{(II)}$$

worin $R^1$ für 3,4-Dichlorphenyl, 3-Chlor-4-methylphenyl, 4-Isopropylphenyl oder Methyl und $R^2$ für Methyl, Butyl oder 2-Benzothiazolyl stehen, fallen insbesondere die folgenden speziellen Ausführungsformen:

IIa: N-(3,4-Dichlorphenyl)-N'-butyl-N'-methyl-harnstoff, bekannt aus Pesticide Manual 7th Ed. (1983) 8860, The British Crop. Protection Council, London;

IIb: N-(3-Chlor-4-methylphenyl)-N',N'-dimethyl-harnstoff, bekannt aus Pesticide Manual 7th Ed. (1983) 3120, The British Crop. Protection Council, London;

IIc: N-(4-Isopropylphenyl)-N',N'-dimethylharnstoff, bekannt aus Pesticide Manual 7th Ed. (1983) 7520, The British Crop. Protection Council, London; und

IId: N-(2-Benzothiazolyl)-N,N'-dimethylharnstoff, bekannt aus Pesticide Manual 7th Ed. (1983) 8050, The British Crop. Protection Council, London.

Unter die Formel III

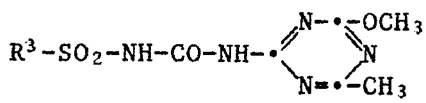

(III)

worin $R^3$ für 2-Chlorphenyl, 2-Methoxycarbonylphenyl, 2-(2-Chloräthoxy)-phenyl oder 2-Methoxycarbonylthien-3-yl fallen die folgenden Ausführungsformen:

IIIa: N-(2-Chlorphenylsulfonyl)-N'-(4-methoxy-6-methyl-1,3,5-triazin-2-yl)-harnstoff, bekannt aus Pesticide Manual 7th Ed. (1983) 3080, The British Crop. Protection Council, London;

IIIb: N-(2-Methoxycarbonylphenylsulfonyl)-N'-(4-methoxy-6-methyl-1,3,5-triazin-2-yl)-harnstoff, bekannt aus der publizierten Europäischen Patentanmeldung EP-A-7687;

IIIc: N-[2-(2-Chloräthoxy)-phenylsulfonyl]-N'-(4-methoxy-6-methyl-1,3,5-triazin-2-yl)-harnstoff, bekannt aus der Europäischen Patentanmeldung EP-A-44808; und

IIId: N-(2-Methoxycarbonylthien-3-ylsulfonyl)-N'-(4-methoxy-6-methyl-1,3,5-triazin-2-yl)-harnstoff, bekannt aus der publizierten Europäischen Patentanmeldung EP-A-30142.

Unter die Formel IV

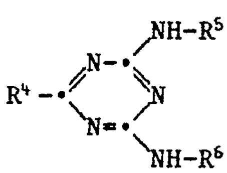

(IV)

worin $R^4$ für Chlor oder Methylthio, $R^5$ für Aethyl oder Methoxypropyl und $R^6$ für Aethyl, tert. Butyl, 1-Cyanoisopropyl oder Isopropyl stehen, fallen insbesondere die folgenden speziellen Ausführungsformen:

IVa: 2-Chlor-4-äthylamino-6-isopropylamino-1,3,5-triazin, bekannt aus Pesticide Manual 7th Ed. (1983) 500, The British Crop. Protection Council, London;

IVb: 2-Chlor-4-(1-cyanoisopropylamino)-6-äthylamino-1,3,5-triazin, bekannt aus Pesticide Manual 7th Ed. (1983) 3470, The British Crop. Protection Councel, London;

IVc: 2-Isopropylamino-4-(3-methoxypropyl)-amino-6-methylthio-1,3,5-triazin, bekannt aus Pesticide Manual 7th Ed. (1983) 8210, The British Crop Protection Council, London;

IVd: 2-Chlor-4,6-bis(äthylamino)-1,3,5-triazin, bekannt aus Pesticide Manual 7th Ed. (1983) 110740, The British Crop Protection Council, London; und

IVe: 2-tert. Butylamino-4-äthylamino-6-methylthio-1,3,5-triazin, bekannt aus Pesticide Manual 7th Ed. (1983) 11330, The British Crop Protection Council, London.

Es hat sich nun überraschenderweise gezeigt, dass eine mengenmässig in bestimmten Grenzen variable Kombination zweier Wirkstoffe, einerseits Wirkstoff I und andererseits eine Aktivsubstanz aus den Wirkstoffklassen II, III oder IV eine synergistische Wirkung entfaltet, die die Mehrzahl aller wichtigen Getreideunkräuter zu bekämpfen vermag, ohne die Getreidekultur zu schädigen. Es werden die Hauptunkräuter der Getreidekulturen, wie Arten der Monokotyledonengattung Alopecurus sowie der Dikotyledonengattungen, Galium, Stellaria, Veronica und Viola selektiv sowohl im Vorauflauf-als auch in Nachauflaufverfahren vernichtet.

Es wird daher gemäss der vorliegenden Erfindung ein neues synergistisches Mittel zur selektiven Unkrautbekämpfung vorgeschlagen, das als Wirkstoff einerseits 3-Carbamoyl-1-(3-methylphenyl)-5-phenyl-1H-1,2,4-triazol der Formel I

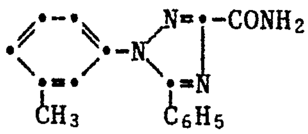

(I)

und andererseits entweder einen Wirkstoff der Formel II

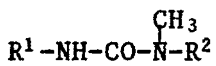

(II)

worin $R^1$ für 3,4-Dichlorphenyl, 3-Chlor-4-methylphenyl, 4-Isopropylphenyl oder Methyl und $R^2$ für Methyl, Butyl oder 2-Benzothiazolyl stehen, oder einen Wirkstoff der Formel III

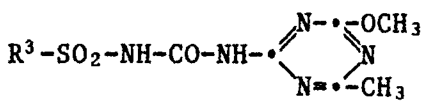

(III)

worin $R^3$ für 2-Chlorphenyl, 2-Methoxycarbonylphenyl-2-(2-Chloräthoxy)-phenyl oder 2-Methoxycarbonylthien-3-yl steht, oder einen Wirkstoff der Formel IV

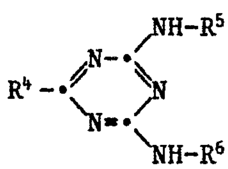

(IV)

worin $R^4$ für Chlor oder Methylthio, $R^5$ für Aethyl oder Methoxypropyl und $R^6$ für Aethyl, tert.Butyl, 1-Cyanoisopropyl oder Isopropyl stehen, in Mischung miteinander enthält.

Es ist in hohem Masse überraschend, dass die Kombination des Wirkstoffs der Formel I mit einem Wirkstoff der Formeln II, III oder IV nicht nur eine prinzipiell zu erwartende additive Ergänzung des Wirkungsspektrums auf die üblichen mit Getreide vergesellschafteten

Unkräuter hervorruft, sondern dass sie einen synergistischen Effekt erzielt, der die Wirkungsgrenzen beider Präparate unter zwei Aspekten erweitert.

Einmal werden die Aufwandmengen der Einzelverbindungen I und II, III oder IV bei gleichbleibend guter Wirkung deutlich gesenkt. Zum anderen erzielt die kombinierte Mischung auch dort noch einen hohen Grad der Unkraut-Bekämpfung, wo beide Einzelverbindungen im Bereich allzu geringer Aufwandmengen völlig wirkungslos geworden sind. Dies hat eine wesentliche Verbreiterung des Unkrautspektrums und eine zusätzliche Erhöhung der Sicherheitsmarge auf Getreide zur Folge, wie sie für unbeabsichtigte Wirkstoffüberdosierung notwendig und erwünscht ist.

Das erfindungsgemässe Mittel kann ausser in Getreidekulturen wie Gerste, Roggen und inbesondere Weizen auch zur selektiven Unkrautbekämpfung in anderen monokotylen Kulturen ähnlicher Wirkstoffempfindlichkeit mit ähnlichem Unkrautbestand eingesetzt werden, wie z.B. Mais und Reis.

Die erfindungsgemässe Wirkstoffkombination enthält einen Wirkstoff der Formel I und einen der Formeln II, III oder IV in beliebigem Mischungsverhältnis, in der Regel mit einem Ueberschuss der einen über die andere Komponente. Das Mischungsverhältnis ist dabei so unkritisch, dass sowohl Ueberschüsse der Komponente der Formel I, als auch Ueberschüsse der Komponente der Formeln II, III oder IV toleriert werden. Bevorzugte Mischungsverhältnisse zwischen dem Wirkstoff I und den Mischpartnern der Formeln II, III oder IV liegen zwischen 500:1 und 1:50, insbesondere zwischen 200:1 und 1:8. Die erfindungsgemässen Wirkstoffkombinationen zeigen eine ausgezeichnete Wirkung gegen Unkräuter, ohne die Getreidekulturen in den mit Vorteil angewendeten Aufwandmengen von 0,05 bis 4 kg, vorzugsweise 0,1 bis 3 kg pro Hektar nennenswert zu beeinflussen.

Als ganz besonders wirksame synergistische Wirkstoffgemische haben sich Kombinationen der Verbindung I mit den folgenden Wirkstoffen der Formeln II, III oder IV erwiesen:

a) N-(3-Chlor-4-methylphenyl)-N',N'-dimethylharnstoff [Verbindung IIb];

b) N-(4-Isopropylphenyl)-N',N'-dimethylharnstoff [Verbindung IIc];

c) N-[2-(2-Chloräthoxy)-phenylsulfonyl]-N'-(4-methoxy-6-methyl-1,3,5-riazin-2-yl)-harnstoff [Verbindung IIIc]; und

d) 2-tert.Butylamino-4-äthylamino-6-methylthio-1,3,5-triazin [Verbindung IVe].

Vorliegende Erfindung betrifft auch die Vewendung des erfindungsgemässen Mittels, also ein Verfahren zur selektiven Ungras-und Unkrautbekämpfung in Getreide unter pre- oder postemergenter Anwendung des Mittels.

Das erfindungsgemässe Mittel mit der neuen Wirkstoffkombination enthält neben den genannten Wirkstoffen noch geeignete Träger- und/oder andere Zuschlagstoffe. Diese können fest oder füssig sein und entsprechen den in der Formulierungstechnik üblichen Stoffen wie z.B. natürlichen oder regenerierten mineralischen Stoffen, Lösungs-, Dispergier-, Netz-, Haft-, Verdickungs-, Bindemittel oder Düngemitteln. Geeignete Anwendungsformen sind daher z.B. Emulsionskonzentrate, direkt versprühbare oder verdünnbare Lösungen, verdünnte Emulsionen, Spritzpulver, lösliche Pulver, Stäubemittel, Granulate, auch Verkapselungen in z.B. polymeren Stoffe. Die Anwendungsverfahren wie Versprühen, Vernebeln, Verstäuben, Verstreuen oder Giessen werden gleich wie die Art der Mittel den angestrebten Zielen und den gegebene Verhältnissen entsprechend gewählt.

Die Formulierungen, d.h. die das erfindungsgemässe Wirkstoffgemisch und gegebenenfalls einen festen oder flüssigen Zusatzstoff enthaltenden Mittel, Zubereitungen oder Zusammensetzungen werden in bekannter Weise hergestellt, z.B. durch innniges Vermischen und/oder Vermahlen der Wirkstoffe mit Streckmitteln, wie z.B. mit Lösungsmitteln, festen Trägerstoffen und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- ode Dioctyphthalat, aliphatische Kohlenwaserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl; oder Wasser.

Als feste Trägerstoffe, z.B. für Stäubemittel und dispergierbare Pulver, werden in der Regel natürliche Gesteinsmehle vewendet, wie Cacit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger .kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materilien anorganischer oder organischer Natur wie insbesondere Dolomit oder zerkleinerte Pflanzenrückstände, wie z.B. Korkmehl oder Sägemehl, verwendet werden.

Besonders vorteilhafte, applikationsfördernde Zusatzstoffe, die zu einer starken Reduktion der Aufwandmenge führen können, sind ferner natürliche (tierische oder pflanzliche) oder synthetische Phospholipide aus der Reihe der Kephaline und Lecithine, wie z.B. Phosphatidyläthanolamin, Phosphatidylserin, Phosphtidylcholin, Sphingomyelin, Phosphatidylinosit, Phosphatidylglycerin, Lysolecithin, Plasmalogene ode Cardiolipin, die man beispielsweise aus tierischen oder pflanzlichen Zellen, insbesondere Hirn, Herz, Lunge, Leber, Eidotter oder Sojabohnen gewinnen kann. Verwendbare Handelsmischungen sind z.B. Phosphatidylcholin-Mischungen. Synthetische Phospholipide sind z.B. Dioctanoylphosphatidylcholin und Dipalmititoylphosphatidylcholin.

Als oberflächenaktive Verbindungen kommen nichtionogene, kation- und/oder anionaktive Tenside in guten Emulgier-, Dispergier- und Netzeigenschaften in Betracht. Unter Tensiden sind auch Tensidgemische zu verstehen.

Geeignete anionische Tenside können sowohl sogenannte wasserlösliche Seifen, als auch wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss- oder Talgöl gewonnen werden können, genannt. Ferner sind auch die Fettsäuremethyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfon-

0132740

säuren von Fettalkohol-Aethylenoxid-Addukten. Die sulfonierten Benzimidazolderivate enthalten vorzugsweise 2-Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)äthylammoniumbromid.

Die in der Formulierungstechnik gebräuchlichen Tenside sind u.a. in folgenden Publikationen beschrieben:

"Mc Cutcheon's Detergents and Emulsifiers Annual" MC Publishing Corp., Ridgewood, New Jersey, 1981;
H. Stache, "Tensid-Taschenbuch", 2. Aufl., C. Hanser Verlag, München, Wien, 1981;
M. and J. Ash. "Encyclopedia of Surfactants", Vol. I-III, Chemical Publishing Co., New York, 1980-1981.

Die agrochemischen Zubereitungen enthalten in der Regel 0,1 bis 95 %, insbesondere 0,1 bis 80 %, Wirkstoffgemisch der Formeln I und II, III oder IV, 1 bis 99,9 % eines festen oder flüssigen Zusatzstoffes und 0 bis 25 %, insbesondere 0,1 bis 25 % eines Tensides.

Insbesondere setzen sich bevorzugte Formulierungen folgendermassen zusammen: (% = Gewichtsprozent)

<u>Emulgierbare Konzentrate</u>

| | | | |
|---|---|---|---|
| Aktives Wirkstoffgemisch: | 1 bis 20 %, | bevorzugt | 5 bis 10 % |
| oberflächenaktives Mittel: | 5 bis 30 %, | vorzugsweise | 10 bis 20 % |
| flüssiges Trägermittel: | 50 bis 94 %, | vorzugsweise | 70 bis 85 % |

<u>Stäube:</u>

| | | | |
|---|---|---|---|
| Aktives Wirkstoffgemisch: | 0,1 bis 10 %, | vorzugsweise | 0,1 bis 1 % |
| festes Trägermittel: | 99,9 bis 90 %, | vorzugsweise | 99,9 bis 99 %. |

Suspension-Konzentrate

| | | |
|---|---|---|
| Aktives Wirkstoffgemisch: | 5 bis 75 %, | vorzugsweise 10 bis 50 % |
| Wasser: | 94 bis 25 %, | vorzugsweise 88 bis 30 % |
| oberflächenaktives Wasser: | 1 bis 40 %, | vorzugsweise 2 bis 30 % |

Benetzbare Pulver

| | | |
|---|---|---|
| Aktives Wirkstoffgemisch: | 0,5 bis 90 %, | vorzugsweise 1 bis 80 % |
| oberflächenaktives Mittel: | 0,5 bis 20 %, | vorzugsweise 1 bis 15 % |
| festes Trägermaterial: | 5 bis 95 %, | vorzugsweise 15 bis 90 % |

Granulate

| | | |
|---|---|---|
| aktives Wirkstoffgemisch: | 0,5 bis 30 %, | vorzugsweise 3 bis 15 % |
| festes Trägermittel: | 99,5 bis 70 %, | vorzugsweise 97 bis 85 %. |

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden.

Den beschriebenen erfindungsgemässen Mitteln lassen sich andere biozide Wirkstoffe oder Mittel beimischen. So können die neuen Mittel ausser den genannten Verbindungen der allgemeinen Formel I und der Formeln II, III oder IV z.B. Insektizide, Fungizide, Bakterizide, Fungistatika, Bakteriostatika oder Nematizide zur Verbreiterung des Wirkungsspektrums enthalten.

Im Einzelnen lassen sich die erfindungsgemässen Mittel allgemein nach den folgenden Beispielen formulieren:

## Formulierungsbeispiele

### Beispiel F1:

### Formulierungsbeispiele für synergistische Wirkstoffgemische der Formeln I und II, III oder IV (% = Gewichtsprozent)

a) Spritzpulver

| | a) | b) | c) | d) |
|---|---|---|---|---|
| Wirkstoff I | 10 % | 20 % | 5 % | 30 % |
| einer der Wirkstoffe II, III oder IV | 10 % | 40 % | 15 % | 30 % |
| Na-Ligninsulfonat | 5 % | 5 % | 5 % | 5 % |
| Na-Laurylsulfat | 3 % | - | 3 % | - |
| Na-Diisobutylnaphthalinsulfonat | - | 6 % | - | 6 % |
| Octylphenolpolyäthylenglykoläther 7-8 Mol AeO) | - | 2 % | - | 2 % |
| Hochdisperse Kieselsäure | 5 % | 27 % | 5 % | 27 % |
| Kaolin | 67 % | - | 67 % | - |

Das Wirkstoffgemisch wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

b) Emulsions-Konzentrat

| | a) | b) | c) |
|---|---|---|---|
| Wirkstoff I | 5 % | 5 % | 12 % |
| einer der Wirkstoffe II, III oder IV | 5 % | 20 % | 13 % |
| Octylphenolpolyäthylenglykoläther (4-5 Mol AeO) | 3 % | 3 % | 3 % |
| Ca-Dodecylbenzolsulfonat | 3 % | 3 % | 2 % |
| Ricinusölpolyglykoläther (36 Mol AeO) | 4 % | 4 % | 4 % |
| Cyclohexanon | 30 % | 30 % | 31 % |
| Xylolgemisch | 50 % | 35 % | 35 % |

Aus diesen Konzentraten können durch Verdünnen mit Wasser Emulsionen jeder gewünschten Konzentration hergestellt werden.

c) Stäubemittel

| | a) | b) | c) | d) |
|---|---|---|---|---|
| Wirkstoff I | 2 % | 4 % | 2 % | 4 % |
| einer der Wirkstoffe II, III oder IV | 3 % | 4 % | 4 % | 8 % |
| Talkum | 95 % | - | 94 % | - |
| Kaolin | - | 92 % | - | 88 % |

Man erhält anwendungsfertige Stäubemittel, indem das Wirkstoffgemisch mit dem Träger vermischt und auf einer geeigneten Mühle vermahlen wird.

d) Extruder Granulat

| | a) | b) | c) |
|---|---|---|---|
| Wirkstoff I | 5 % | 3 % | 5 % |
| einer der Wirkstoffe II, III oder IV | 5 % | 7 % | 15 % |
| Na-Ligninsulfonat | 2 % | 2 % | 2 % |
| Carboxymethylcellulose | 1 % | 1 % | 1 % |
| Kaolin | 87 % | 87 % | 77 % |

Das Wirkstoffgemisch wird mit den Zusatzstoffen vermischt, vermahlen und mit Wasser angefeuchtet. Dieses Gemisch wird extrudiert und anschliessend im Luftstrom getrocknet.

e) Umhüllungs-Granulat

| | a) | b) |
|---|---|---|
| Wirkstoff I | 1,5 % | 3 % |
| einer der Wirkstoffe II, III oder IV | 1,5 % | 5 % |
| Polyäthylenglykol (MG 200) | 3 % | 3 % |
| Kaolin | 94 % | 89 % |

Das fein gemahlene Wirkstoffgemisch wird in einem Mischer auf das mit Polyäthylenglykol angefeuchtete Kaolin gleichmässig aufgetragen. Auf diese Weise erhält man staubfreie Umhüllungs-Granulate.

f) Suspensions-Konzentrat

| | a) | b) |
|---|---|---|
| Wirkstoff I | 20 % | 20 % |
| einer der Wirkstoffe II, III oder IV | 20 % | 40 % |
| Aethylenglykol | 10 % | 10 % |
| Nonylphenolpolyäthylenglykoläther (15 Mol AeO | 6 % | 6 % |
| Na-Ligninsulfonat | 10 % | 10 % |
| Carboxymethylcellulose | 1 % | 1 % |
| 37 %ige wässrige Formaldehyd-Lösung | 0,2 % | 0,2 % |
| Silikonöl in Form einer 75 %igen wässrigen Emulsion | 0,8 % | 0,8 % |
| Wasser | 32 % | 12 % |

Das fein gemahlene Wirkstoffgemisch wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Ein synergistischer Effekt liegt bei Herbiziden immer dann vor, wenn die herbizide Wirkung der Wirkstoffkombination I und II, III oder IV grösser ist als die Summe der Wirkung der einzeln applizierten Wirkstoffe.

Die zu erwartende herbizide Wirkung E für eine gegebene Kombination zweier Herbizide kann (vgl. COLBY, S.R., "Calculating synergistic and antagonistic response of herbicide combinations", Weeds 15, Seiten 20-22, 1967) wie folgt berechnet werden:

$$E = X + \frac{Y \cdot (100-X)}{100}$$

Dabei bedeuten:

X = Prozent Wachstumshemmung bei Behandlung mit einem Herbizid I mit p kg Aufwandmenge pro Hektar im Vergleich zur unbehandelten Kontrolle (= 0 %).

Y = Prozent Wachstumshemmung bei Behandlung mit einem Herbizid II, III oder IV mit q kg Aufwandmenge pro Hektar im Vergleich zur unbehandelten Kontrolle

E = Erwartete herbizide Wirkung (Prozent Wachstumshemmung im Vergleich zur unbehandelten Kontrolle) nach Behandlung mit Herbizidgemisch I und II, III oder IV bei einer Aufwandmenge von p + q kg Wirkstoffmenge pro Hektar.

Ist die tatsächlich beobachtete Wirkung grösser als der zu erwartende Wert E, so liegt Synergismus vor.

Der synergistische Effekt der Kombinationen der Wirkstoffe I und II, III oder IV wird in den folgenden Beispielen demonstriert.

<u>Biologische Beispiele:</u>

<u>Beispiel B1:</u> Preemergenter Versuch

Die Testpflanzensamen werden in Plastiktöpfe, die 0,5 l sterilisierte Ackererde enthalten, im Gewächshaus angesät. Einen Tag nach der Saat wird die Erdoberfläche mit einer wässrigen Dispersion der Wirkstoffkombination besprüht.

Die Aufwandmenge an Wirksubstanz wird durch geeignete Vedünnung des Konzentrats eingestellt. Man versprüht jeweils 50 ml Dispersion pro $m^2$. Die Testpflanzen werden im Gewächshaus bei Tagestemperaturen von 18-22°C und Nachttemperaturen von 10-11°C, einer rel. Luftfeuchtigkeit von 60-70 % und täglicher Bewässerung weiterkultiviert. 32 Tage nach Saat und Applikation erfolgt die Auswertung. Registriert wird die prozentuale Wachstumshemmung im Vergleich zur unbehandelten Kontrolle. Als Massstab gilt folgende Skala:

100 % = Pflanzen abgestorben
50 % = mittlere Wirkung
0 % = wie unbehandelte Kontrolle

0182740

Die Versuchsergebnisse sind zusammen mit dem nach der oben zitierten Colby-Formel berechneten Erwartungswerten in den folgenden Tabellen A und B eingetragen. Angegeben sind die jeweils angewendeten Aufwandmengen sowie die geprüften Kultur- und Unkrautpflanzen.

Tabelle A: preemergenter Versuch

| Testpflanze | Herbizid | Verbindung I | | | | Verbindung IIb | | Mischung von Verbindung I und Verbindung IIb | | | | | | | | erwartete Wirkung berechnet nach Colby | | | | | | | |
|---|---|---|---|---|---|---|---|---|---|---|---|---|---|---|---|---|---|---|---|---|---|---|---|
| | Verb. I g AS/ha | 1000 | 500 | 250 | 125 | | | 1000 | 500 | 250 | 125 | 1000 | 500 | 250 | 125 | 1000 | 500 | 250 | 125 | 1000 | 500 | 250 | 125 |
| | Verb. IIb g AS/ha | | | | | 1000 | 500 | 1000 | 1000 | 1000 | 1000 | 500 | 500 | 500 | 500 | 1000 | 1000 | 1000 | 1000 | 500 | 500 | 500 | 500 |
| Weizen 'Flinor' | | 5 | 0 | 0 | 0 | 10 | 0 | 5 | 0 | 0 | 0 | 5 | 0 | 0 | 0 | 15 | 10 | 10 | 10 | 5 | 0 | 0 | 0 |
| Gerste 'Gold' | | 10 | 0 | 0 | 0 | 10 | 0 | 10 | 0 | 0 | 0 | 5 | 0 | 0 | 0 | 19 | 10 | 10 | 10 | 10 | 0 | 0 | 0 |
| Alopecurus myosuroides | | 15 | 0 | 0 | 0 | 100 | 85 | 100 | 97 | 97 | 90 | 80 | 80 | 70 | 70 | 100 | 100 | 100 | 100 | 87 | 85 | 85 | 85 |
| Stellaria media | | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| Veronica persica | | 100 | 100 | 100 | 100 | 10 | 0 | 100 | 100 | 100 | 100 | 100 | 100 | 100 | 100 | 100 | 100 | 100 | 100 | 100 | 100 | 100 | 100 |
| Viola arvensis | | 100 | 100 | 100 | 100 | 40 | 40 | 100 | 100 | 100 | 100 | 100 | 100 | 100 | 100 | 100 | 100 | 100 | 100 | 100 | 100 | 100 | 100 |

Tabelle B: preemergenter Versuch

| Testpflanze | Herbizid | Verbindung I | | | | Verbindung IIIc | | Mischung von Verbindung I und Verbindung IIIc | | | | | | | | erwartete Wirkung berechnet nach Colby | | | | | | | |
|---|---|---|---|---|---|---|---|---|---|---|---|---|---|---|---|---|---|---|---|---|---|---|---|
| | Verb. I g AS/ha | 1000 | 500 | 250 | 125 | | | 1000 | 500 | 250 | 125 | 1000 | 500 | 250 | 125 | 1000 | 500 | 250 | 125 | 1000 | 500 | 250 | 125 |
| | Verb. IIIc g AS/ha | | | | | 20 | 5 | 20 | 20 | 20 | 20 | 5 | 5 | 5 | 5 | 20 | 20 | 20 | 20 | 5 | 5 | 5 | 5 |
| Weizen 'Flinor' | | 5 | 0 | 0 | 0 | 0 | 0 | 30 | 5 | 0 | 0 | 5 | 0 | 0 | 0 | 5 | 0 | 0 | 0 | 5 | 0 | 0 | 0 |
| Gerste 'Gold' | | 10 | 0 | 0 | 0 | 5 | 0 | 30 | 10 | 5 | 0 | 0 | 0 | 0 | 0 | 15 | 5 | 5 | 5 | 10 | 0 | 0 | 0 |
| Alopecurus myosuroides | | 15 | 0 | 0 | 0 | 90 | 60 | 95 | 95 | 90 | 90 | 95 | 80 | 75 | 70 | 92 | 90 | 90 | 90 | 66 | 60 | 60 | 60 |
| Stellaria media | | 100 | 100 | 100 | 100 | 97 | 95 | 100 | 100 | 100 | 100 | 100 | 100 | 100 | 100 | 100 | 100 | 100 | 100 | 100 | 100 | 100 | 100 |
| Veronica persica | | 100 | 100 | 100 | 100 | 97 | 97 | 100 | 100 | 100 | 100 | 100 | 100 | 100 | 100 | 100 | 100 | 100 | 100 | 100 | 100 | 100 | 100 |
| Viola arvensis | | 100 | 100 | 100 | 100 | 100 | 85 | 100 | 100 | 100 | 100 | 100 | 100 | 100 | 100 | 100 | 100 | 100 | 100 | 100 | 100 | 100 | 100 |

Beispiel B2: Postemergenter Versuch
Die Testpflanzen werden in Plastiktöpfen, die 0,5 l sterilisierte Ackererde enthalten angezogen. Nach dem Auflaufen werden die Pflanzen im 2-3 Blattstadium (ca. 2 Wochen nach der Saat) mit einer wässrigen Dispersion der Wirkstoffkombinationen besprüht. Die Spritzbrühemenge beträgt 50 ml pro $m^2$. Die Aufwandmenge an Wirksubstanzen wird durch geeignete Verdünnung des Konzentrats eingestellt. Die Testpflanzen werden im Gewächshaus bei Tagestemperaturen von 18-22°C und Nachttemperaturen von 10-12°C, einer rel. Luftfeuchtigkeit von 60-70 % und täglicher Bewässerung weiterkultiviert. 23 Tage nach der Applikation erfolgte die Auswertung. Der Schädigungsgrad der Pflanzen wird prozentual nach gleichem Massstab wie im preemergenten Versuch bewertet.

Die Versuchsergebnisse sind zusammen mit den nach der oben ziterten Colby-Formel berechneten Erwartungswerten in den folgenden Tabellen C und D eingetragen. Angegeben sind jeweils die angewendeten Aufwandmengen sowie die geprüften Kultur- und Unkrautpflanzen.

Tabelle C: postemergenter Versuch

| Testpflanze | Herbizid | Verbindung I | | | | Verbindung IIb | | Mischung von Verbindung I und Verbindung IIb | | | | | | | | erwartete Wirkung berechnet nach Colby | | | | | | | |
|---|---|---|---|---|---|---|---|---|---|---|---|---|---|---|---|---|---|---|---|---|---|---|---|
| | Verb. I g AS/ha | 1000 | 500 | 250 | 125 | | | 1000 | 500 | 250 | 125 | 1000 | 500 | 250 | 125 | 1000 | 500 | 250 | 125 | 1000 | 500 | 250 | 125 |
| | Verb. IIb g AS/ha | | | | | 1000 | 500 | 1000 | 1000 | 1000 | 1000 | 500 | 500 | 500 | 500 | 1000 | 1000 | 1000 | 1000 | 500 | 500 | 500 | 500 |
| Weizen 'Flinor' | | 20 | 0 | 0 | 0 | 0 | 0 | 40 | 30 | 10 | 0 | 30 | 20 | 0 | 0 | 20 | 0 | 0 | 0 | 20 | 0 | 0 | 0 |
| Gerste 'Gold' | | 10 | 0 | 0 | 0 | 0 | 0 | 20 | 0 | 0 | 0 | 20 | 0 | 0 | 0 | 10 | 0 | 0 | 0 | 10 | 0 | 0 | 0 |
| Alopecurus myosuroides | | 0 | 0 | 0 | 0 | 60 | 40 | 100 | 98 | 95 | 95 | 80 | 80 | 80 | 40 | 60 | 60 | 60 | 60 | 40 | 40 | 40 | 40 |
| Stellaria media | | 100 | 98 | 98 | 70 | 100 | 80 | 100 | 100 | 100 | 100 | 100 | 100 | 100 | 100 | 100 | 100 | 100 | 100 | 100 | 100 | 100 | 94 |
| Galium aparine | | 40 | 25 | 10 | 10 | 10 | 0 | 90 | 90 | 90 | 90 | 90 | 60 | 60 | 25 | 46 | 33 | 19 | 19 | 40 | 25 | 10 | 10 |
| Veronica persica | | 100 | 98 | 95 | 60 | 0 | 0 | 100 | 100 | 70 | 30 | 100 | 100 | 90 | 30 | 100 | 98 | 95 | 60 | 100 | 98 | 95 | 60 |
| Viola arvensis | | 90 | 30 | 10 | 0 | 95 | 80 | 100 | 100 | 100 | 98 | 100 | 100 | 98 | 60 | 100 | 97 | 96 | 95 | 98 | 86 | 82 | 80 |

Tabelle D: postemergenter Versuch

| Testpflanze | Herbizid | Verbindung I | | | | Verbindung IIIc | | Mischung von Verbindung I und Verbindung IIIc | | | | | | | | erwartete Wirkung berechnet nach Colby | | | | | | | |
|---|---|---|---|---|---|---|---|---|---|---|---|---|---|---|---|---|---|---|---|---|---|---|---|
| | Verb. I g AS/ha | 1000 | 500 | 250 | 125 | | | 1000 | 500 | 250 | 125 | 1000 | 500 | 250 | 125 | 1000 | 500 | 250 | 125 | 1000 | 500 | 250 | 125 |
| | Verb. IIIc g AS/ha | | | | | 20 | 5 | 20 | 20 | 20 | 20 | 5 | 5 | 5 | 5 | 20 | 20 | 20 | 20 | 5 | 5 | 5 | 5 |
| Weizen 'Flinor' | | 20 | 0 | 0 | 0 | 10 | 0 | 0 | 0 | 0 | 0 | 0 | 0 | 0 | 0 | 28 | 10 | 10 | 10 | 20 | 0 | 0 | 0 |
| Gerste 'Gold' | | 10 | 0 | 0 | 0 | 0 | 0 | 10 | 0 | 0 | 0 | 10 | 0 | 0 | 0 | 10 | 0 | 0 | 0 | 10 | 0 | 0 | 0 |
| Stellaria media | | 100 | 98 | 98 | 70 | 100 | 100 | 100 | 100 | 100 | 100 | 100 | 100 | 100 | 100 | 100 | 100 | 100 | 100 | 100 | 100 | 100 | 100 |
| Galium aparine | | 40 | 25 | 10 | 10 | 90 | 20 | 98 | 95 | 90 | 90 | 70 | 60 | 40 | 40 | 94 | 93 | 91 | 91 | 52 | 40 | 28 | 28 |
| Veronica persica | | 100 | 98 | 95 | 60 | 70 | 10 | 95 | 95 | 70 | 70 | 98 | 95 | 60 | 40 | 100 | 99 | 98 | 88 | 100 | 98 | 96 | 64 |
| Viola arvensis | | 90 | 30 | 10 | 0 | 95 | 95 | 100 | 100 | 100 | 100 | 100 | 100 | 100 | 100 | 100 | 97 | 96 | 95 | 100 | 97 | 96 | 95 |

0182740

Patentansprüche

1. Synergistisches Mittel zur selektiven Unkrautbekämpfung, dadurch gekennzeichnet, dass es neben Träger- und/oder anderen Zuschlagstoffen als wirksame Komponente einerseits 3-Carbamoyl-1-(3-methylphenyl)-5-phenyl-1H-1,2,4-triazol der Formel I

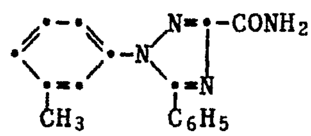

(I)

und andererseits entweder einen Wirkstoff der Formel II

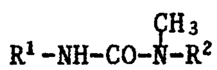

(II)

worin $R^1$ für 3,4-Dichlorphenyl, 3-Chlor-4-methylphenyl, 4-Isopropylphenyl oder Methyl und $R^2$ für Methyl, Butyl oder 2-Benzothiazolyl stehen, oder einen Wirkstoff der Formel III

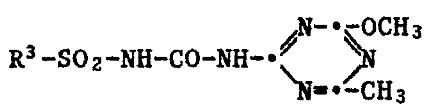

(III)

worin $R^3$ für 2-Chlorphenyl, 2-Methoxycarbonylphenyl, 2-(2-Chloräthoxy)-phenyl oder 2-Methoxycarbonylthien-3-yl steht, oder einen Wirkstoff der Formel IV

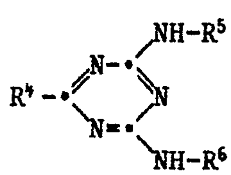

(IV)

worin $R^4$ für Chlor oder Methylthio, $R^5$ für Aethyl oder Methoxypropyl und $R^6$ für Aethyl, tert. Butyl, 1-Cyanoisopropyl ode Isopropyl stehen, enthält.

2. Mittel gemäss Anspruch 1, dadurch gekennzeichnet, dass es neben der Verbindung der Formel I als zweite Wirkkomponente N-(3-Chlor-4-methylphenyl)-N',N'-dimethylharnstoff (IIb) enthält.

3. Mittel gemäss Anspruch 1, dadurch gekennzeichnet, dass es neben der Verbindung der Formel I als zweite Wirkkomponente N-(4-Isopropylphenyl)-N',N'-dimethylharnstoff (IIc) enthält.

4. Mittel gemäss Anspruch 1, dadurch gekennzeichnet, dass es neben der Verbindung der Formel I als zweite Wirkkomponente N-[2-(2-Chloräthoxy)-phenylsulfonyl]-N'-(4-methoxy-6-methyl-1,3,5-triazin-2-yl)-harnstoff (IIIc) enthält.

5. Mittel gemäss Anspruch 1, dadurch gekennzeichnet, dass es neben der Verbindung der Formel I als zweite Wirkkomponente 2-tert.Butylamino-4-äthylamino-6-methylthio-1,3,5-triazin (IVe) enthält.

6. Mittel gemäss Patentanspruch 1, dadurch gekennzeichnet, dass im genannten Mittel die Komponente I gegenüber der zweiten Komponente der Formeln II, III oder IV in einem Gewichtsverhältnis zwischen 500:1 und 1:50 vorhanden ist.

7. Mittel gemäss Patentanspruch 6, dadurch gekennzeichnet, dass das Gewichtsverhältnis zwischen Komponente (I) und Komponente der Formeln II, III oder IV 200:1 bis 1:8 beträgt.

8. Verfahren zur selektiven Unkrautbekämpfung in Getreide, dadurch gekennzeichnet, dass man verunkrautete Getreidekulturen pre- oder postemergent mit einer wirksamen Menge eines Mittels gemäss Patentanspruch 1 behandelt.

9. Verfahren gemäss Patentanspruch 8, dadurch gekennzeichnet, dass man Getreidekulturen, welche als Unkräuter Monokotyledonen der Gattung Alopecurus und Dikotyledonen der Gattungen Galium, Sinapis, Veronica oder Viola enthalten, mit dem genannten Mittel behandelt.

10. Verfahren gemäss Anspruch 8, dadurch gekennzeichnet, dass man die Getreidekultur mit dem genannten Mittel in Aufwandmengen behandelt, die 0,05 bis 4 kg, vorzugsweise 0,1 bis 3 kg Totalwirkstoffe pro Hektar entsprechen.

11. Verwendung einer wirksamen Menge eines Mittels gemäss Patentanspruch 1 zur pre- und postemergenten selektiven Unkrautbekämpfung in Getreidekulturen.

FO 7.5 CW/bg*/sm*